# EUROPÄISCHE PATENTSCHRIFT

(11) **EP 1 325 258 B1**
(45) Veröffentlichungstag und Bekanntmachung des Hinweises auf die Patenterteilung: **13.08.2008**
(21) Anmeldenummer: 01986754.8
(22) Anmeldetag: 21.09.2001
(51) Int. Cl.: F16L 37/32

(54) **MINIATURVERSCHLUSSKUPPLUNG**
MINIATURE CLOSURE COUPLING
ACCOUPLEMENT DE FERMETURE MINIATURE

(30) Priorität: 09.10.2000 DE 10050100
(43) Veröffentlichungstag der Anmeldung: 09.07.2003
(73) Patentinhaber: Merck Patent GmbH, 64293 Darmstadt (DE)
(72) Erfinder: PIEPER, Guido, 68199 Mannheim (DE); Ukelis, Michael, 64560 Riedstadt (DE); WURZIGER, Hanns, 64291 Darmstadt (DE)
(74) Vertreter: Katscher, Helmut
(86) Internationale Anmeldenummer: PCT/EP2001/010928
(87) Internationale Veröffentlichungsnummer: WO 2002/031397

(56) Entgegenhaltungen:
- EP-A- 0 187 238
- WO-A-99/63260
- US-A- 4 700 743
- US-A- 4 917 668
- US-A- 5 029 904

## Beschreibung

Die Erfindung betrifft eine Verschlusskupplung für die Verbindung von Laborgeräten und Reaktionsbehältern mit einer Versorgungsleitung zum Durchleiten von flüssigen oder gasförmigen Volumenströmen mit einem Kupplungsteil und einem damit verbindbaren Anschlussteil, die jeweils einen Ventilsitz, einen Ventilverschlusskörper und ein Ventilfederelement aufweisen, wobei der Ventilverschlusskörper des Kupplungsteils und der Ventilverschlusskörper des Anschlussteils als Kugeln ausgeführt sind, und mit einer das Anschlussteil und das Kupplungsteil lösbar verbindenden Verriegelungsvorrichtung, wobei in verbundenem Zustand eine vorstehende Ausformung des Anschlussteils das Ventil des Kupplungsteils öffnet und eine vorstehende Ausformung des Kupplungsteils das Ventil des Anschlussteils öffnet.

Das Interesse an biologischen, biochemischen oder chemischen Prozessen und Verfahren für die industrielle Verwendung nimmt stetig zu. Umfangreiche Forschungsprojekte und eine industrielle Anwendung erfordern die immer schnellere Bearbeitung und Analyse einer stetig ansteigenden Anzahl von Proben. Vor allem bei Forschungsprojekten werden die einzelnen Reaktionsmethoden und Analyseverfahren sehr häufig variiert und sogar grundlegend geändert. Zusätzlich zum wachsenden Bedarf an prozessierten Proben steigen die Anforderungen hinsichtlich Flexibilität und Variabilität der Prozessführung.

Zunehmend miniaturisierte Reaktionsbehälter sowie hochparallelisierte Reaktions- und Analyseverfahren ermöglichen einen hohen Probendurchsatz bei gleichzeitig sehr geringem Verbrauch an Probenmaterial und notwendigen Reagenzien. Gleichzeitig wird weniger Raum für die Durchführung der einzelnen Reaktionen benötigt und die Menge an möglicherweise aufwendig zu entsorgenden Reaktionsprodukten reduziert, was vor allem bei größeren Forschungseinrichtungen zur Reduktion von Kosten und Arbeitsaufwand führt.

Zwischen einzelnen Untersuchungsreihen müssen die für das nächste Reaktionsverfahren vorgesehenen Laborgeräte und Probenbehälter mit einigem Zeit- und Arbeitsaufwand umgerüstet werden. Sehr häufig sind für die einzelnen Reaktionsschritte eine kontrollierte Zugabe und Entnahme einzelner Reagenzien oder Reaktionsprodukte erforderlich. Entsprechende Versorgungsleitungen müssen dann an den miniaturisierten Geräten und Probenbehältern angebracht werden.

Durch einen modularen Aufbau der einzelnen Verfahrensschritte kann in kurzer Zeit der gesamte für eine Untersuchung notwendige Reaktionsprozess mit anschließender Analyse der Reaktionsprodukte aus einzelnen unabhängigen Verfahrensschritten zusammengestellt werden. Soll ein bestimmter Verfahrensschritt entfallen oder hinzugenommen werden, so muss nicht mehr das gesamte Reaktionsverfahren neu gestaltet und aufgebaut werden. Dies wird durch entsprechend modular gestaltete miniaturisierte Laborgeräte und Reaktionsbehälter weitgehend vereinfacht. Die einzelnen modularen Mikrokomponenten müssen dann nur in der richtigen Anordnung miteinander verbunden werden, um die gewünschte Prozessführung zu ermöglichen.

Für die Versorgung der einzelnen Mikrokomponenten mit flüssigen oder gasförmigen Reagenzien muss eine dichte Verbindung der einzelnen Mikrokomponenten mit den jeweiligen Versorgungsleitungen gewährleistet sein. Wegen der bedingt durch die Miniaturisierung sehr geringen Probenmenge ist zwar kein großer volumendurchsatz durch die einzelnen Versorgungsleitungen erforderlich, für einen sicheren und dichten Anschluss der Versorgungsleitung an der Mikrokomponente steht aber auch entsprechend wenig Raum zur verfügung. Demzufolge ist die Handhabung der Mikrokomponenten und der daran angepassten Verbindungsvorrichtungen umständlich und schwierig.

Aus DE-U-29911281 ist eine aus vielen Einzelteilen bestehende Verschlusskupplung der eingangs genannten Gattung bekannt. Ein Aufnahmeteil und ein Einsteckteil der dort beschriebenen Verschlusskupplung können rastend miteinander verbunden werden, wobei eine Stellhülse in ihrer Schließstellung Kugeln in eine Ringnut des Einsteckteils eingedrückt hält. Die Stellhülse weist eine federbelastete Kugelsperre auf, bei deren Betätigung ein Sperrriegel die Stellhülse freigibt, so dass diese gegen die Rückstellkraft einer weitere Feder ausgelenkt werden kann und dabei die Kugeln aus deren Schließstellung freigibt.

Bei der vorangehend beschriebenen Ausgestaltung der rastenden Verbindung sind zusätzlich zu der Stellhülse drei Kugeln, zwei Federelemente sowie mindestens ein Sperrriegel erforderlich, um eine zuverlässige Verbindung des Aufnahmeteils mit dem Einsteckteil gewährleisten zu können. Eine solche Ausgestaltung einer rastenden Verbindung verursacht einen hohen Herstellungsaufwand und führt auf Grund der Anzahl der miteinander in Wirkverbindung stehenden Einzelteile bei unsachgemäßer Handhabung oder auch nur bei üblicher mechanischer Beanspruchung zu einem erhöhten Risiko an möglichen Fehlfunktionen oder Defekten, welche die Verschlusskupplung unbrauchbar machen können.

Auf Grund der großen Anzahl an Einzelteilen ist die vorangehend beschriebene Verschlusskupplung auch nicht für eine weitgehende Miniaturisierung geeignet, wie sie für Forschungszwecke zunehmend gefordert wird und zweckmäßig ist.

Aufgabe der Erfindung ist es demzufolge, eine Verschlusskupplung für die Verbindung von Laborgeräten und Reaktionsbehältern der eingangs genannten Gattung zum Durchleiten von flüssigen oder gasförmigen Volumenströmen so auszugestalten, dass bei möglichst geringer Baugröße eine einfach handhabbare, sichere und dichte Verbindung einzelner Mikrokomponenten ermöglicht wird.

Diese Aufgabe wird erfindungsgemäß dadurch gelöst, dass das Anschlussteil eine ringförmige Einschnürung aufweist, in welche eine ringförmige Ausformung des Kupplungsteils eingreift, um das Anschlussteil mit dem Kupplungsteil rastend zu verbinden.

Eine so gestaltete Miniaturverschlusskupplung weist bei sehr geringer Baugröße nur wenige notwendige Einzelteile auf. Die einfach zu fertigende Miniaturverschlusskupplung kann auch an unzugänglichen Stellen der Mikrokomponenten dicht zusammengefügt werden. Die im gelösten Zustand auf beiden Seiten geschlossenen Ventile werden beim Verbinden automatisch geöffnet, so dass eine Durchleitung von flüssigen oder gasförmigen Volumenströmen möglich ist. Die Verriegelungsvorrichtung gewährt einen sicheren Halt auch bei stärkerer mechanischer Beanspruchung der Verbindung. Durch den einfachen Aufbau der Miniaturverschlusskupplung ist eine nahezu beliebige Miniaturisierung der beiderseitig abschließenden Verschlusskupplung denkbar.

Vorzugsweise ist ein das Kupplungsteil umgebender Sicherheitsring über den Bereich der Rastverbindung verschiebbar, der die Rastverbindung unlösbar fixiert. Ein derartiger Sicherheitsring ist unabhängig von der Anordnung und Ausrichtung der Verschlusskupplung einfach und zuverlässig betätigbar und bewirkt eine sichere, unlösbare Fixierung der Rastverbindung.

Um die Sicherheit und die Bedienung des Sicherheitsrings weiter zu verbessern ist vorgesehen, dass die Endposition des Sicherheitsrings durch eine fühlbare Rastung vorgegeben wird.

Der Ventilverschlusskörper des Anschussteils und der Ventilverschlusskörper des Kupplungsteils sind so angeordnet, dass sie sich im verbundenen Zustand von Anschlussteil und Kupplungsteil gegenseitig berühren und aus der jeweiligen Verschlusslage auslenken. Die beiden Ventilverschlusskörper sind jeweils leicht vorstehend angeordnet. Wird das Anschlussteil in das Kupplungsteil gesteckt, so berühren sich die beiden Ventilverschlusskörper schon, bevor das Anschlussteil und das Kupplungsteil vollständig zusammengefügt sind. Beim weiteren Zusammenfügen des Anschlussteils mit dem Kupplungsteil bis hin zum endgültig verbundenen Zustand verschieben sich die beiden Ventilverschlusskörper gegenseitig gegen den jeweilig herrschenden Federdruck aus ihrer Verschlusslage und öffnen dadurch die Miniaturverschlusskupplung.

Sobald das Anschlussteil von dem Kupplungsteil getrennt wird, drücken die jeweiligen Ventilfedern die zugeordneten Ventilverschlusskörper in die jeweilige verschlusslage, so dass die Ventile auf beiden Seiten der Miniaturverschlusskupplung dicht geschlossen sind. Ein Austreten des im verbundenen Zustand durchgeleiteten Mediums ist dadurch unmöglich.

Das Anschlussteil und das Kupplungsteil können eine im wesentlichen hohlzylindrische Form aufweisen, innerhalb der jeweils der Ventilsitz, der Ventilverschlusskörper und die Ventilfeder angeordnet sind, wobei das flüssige oder gasförmige Material durch den zylindrischen Hohlraum des Anschlussteils und des Kupplungsteils hindurchgeleitet wird. Durch diese Bauweise wird eine sehr kompakte Gestaltung der Miniaturverschlusskupplung ermöglicht. Der Hub der Ventilfeder sowie die Auslenkung des Ventilverschlusskörpers liegen innerhalb der jeweiligen im Wesentlichen zylinderförmigen Aussparung. Die im Anschlussteil und im Kupplungsteil angeordneten Ventile benötigen deshalb kaum zusätzlichen Raum. Gleichzeitig wird der Hohlraum der beiderseitigen Aussparungen durch das jeweilige Ventil nahezu ausgefüllt, so dass nur eine sehr geringe Menge des flüssigen oder gasförmigen Mediums sich innerhalb der Miniaturverschlusskupplung befindet, die deshalb ein sehr geringes Totvolumen aufweist.

Vorteilhafterweise ist vorgesehen, dass das Anschlussteils und das Kupplungsteil jeweils einen Anschlag aufweisen, der die Auslenkung des zugeordneten Ventilverschlusskörpers begrenzt. Die jeweils mögliche maximale Auslenkung des Ventilverschlusskörpers ist dadurch so begrenzbar, dass nicht nur einer der beiden Ventilverschlusskörper beim Zusammenfügen des Anschlussteils und des Kupplungsteils ausgelenkt werden kann.

Selbst wenn die Federkräfte so unterschiedlich sind, dass zuerst nur ein Ventilverschluaskörper von dem anderen, im wesentlichen unbeweglichen Ventilverschlusskörper ausgelenkt wird, so stößt dieser ausgelenkte Ventilverschlusskörper bald an den zugeordneten Anschlag, der eine weitere Auslenkung des Ventilverschlusskörpers verhindert. Der bereits ausgelenkte Ventilverschlusskörper wirkt jetzt als starrer Anschlag, der den bisher nicht ausgelenkten Ventilverschlusskörper beim weiteren Zusammenfügen des Anschlussteils mit dem Kupplungsteil verschiebt. Auf diese Weise wird mit einfachen Mitteln das gleichzeitige und nahezu gleichmäßige Öffnen beider Ventile gewährleistet.

Vorzugsweise ist vorgesehen, dass ein das Kupplungsteil umgebender Sicherheitsring über den Bereich der Rastverbindung verschiebbar ist, der die Rastverbindung unlösbar fixiert. Beispielsweise können während des Betriebs einzelne Reaktionen zu einem Druckanstieg und damit zu einer zusätzlichen Belastung der Verbindungen führen. Um auch in diesem Fall einen sicheren Zusammenhalt der Rastverbindung der Miniaturverschlusskupplung zu gewährleisten, kann ein Sicherheitsring über die Rastverbindung geschoben werden, der so eng anliegt, dass die Rastverbindung nicht mehr gelöst werden kann. Erst wenn der Sicherheitsring von dem Bereich der Rastverbindung weggeschoben wird, kann diese wieder gelöst und so das Anschlussteil vom Kupplungsteil getrennt werden. Zweckmäßigerweise kann die Endposition des Sicherheitsrings ebenfalls durch eine fühlbare Rastung vorgegeben werden.

Gemäß einer Ausgestaltung des Erfindungsgedankens ist vorgesehen, dass mehrere Miniaturverschlusskupplungen zu einem Mehrfach-Andocksystem kombinierbar sind. So können beispielsweise die Zu- und Ableitung eines bestimmten Reagenz zu einer einzelnen Mehrfachkupplung kombiniert werden, so dass der zum Verbinden erforderliche Arbeits-und Zeitaufwand weiter reduziert werden kann. Durch eine solche Mehrfachkupplung wird der gleichzeitige Zu- und Abfluss des Reagenz gewährleistet.

Weitere vorteilhafte Ausgestaltungen des Erfindungsgedankens sind Bestandteil weiterer Unteransprüche.

Nachfolgend wird ein Ausführungsbeispiel näher erläutert, das in der Zeichnung dargestellt ist. Es zeigt:
Fig. 1 eine teilweise angeschnittene Darstellung einer geöffneten Miniaturverschlusskupplung,
Fig. 2 die in Fig. 1 gezeigte Miniaturverschlusskupplung im geschlossenen Zustand,
Fig. 3 ein Anschlussteil der in den Fig. 1 und 2 gezeigten Miniaturverschlusskupplung in auseinandergezogener Darstellung und
Fig. 4 ein Kupplungsteil der in den Fig. 1 und 2 gezeigten Miniaturverschlusskupplung im auseinandergezogener Darstellung.

Die in den Fig. gezeigte Miniaturverschlusskupplung weist ein Anschlussteil 1 auf, welches in ein daran angepasstes Kupplungsteil 2 gesteckt werden kann. Das Anschlussteil 1 und das Kupplungsteil 2 sind radialsymmetrisch und weisen jeweils eine durchgehende, im wesentlichen zylinderförmige konzentrische Aussparung auf. Der Außendurchmesser des Anschlussteils 1 ist auf der dem kupplungsteil 2 zugewandten Seite an eine zylinderförmige Aussparung 3 des Kupplungsteils 2 angepasst, so dass das Anschlussteil 1 in diese zylinderförmige Aussparung 3 eingeführt werden kann. Ein ringförmig umlaufender, nach innen gerichteter Vorsprung 4 des Kupplungsteils 2 bildet einen Anschlag, der die maximale Eindringtiefe des Anschlussteils 1 in die zylinderförmige Aussparung 3 begrenzt.

Der ringförmig umlaufende, nach innen ragende Vorsprung 4 des Kupplungsteils 2 bildet gleichzeitig den Ventilsitz des Ventils 5 des Kupplungsteils 2. Im Kupplungsteil 2 ist ein das Ventil 5 verschließender Ventilverschlusskörper als Kugel 6 ausgeführt. Die Kugel 6 wird von einer zugeordneten schraubenförmigen Ventilfeder 7 in die Verschlusslage gedrückt. Statt einer schraubenförmigen Ventilfeder 7 ist auch eine Ausführung als Schenkel- oder Tellerfeder denkbar. Die Ventilfeder 7 ist vorzugsweise aus chemisch beständigem Kunststoff oder aus Metall hergestellt.

Die schraubenförmige Ventilfeder 7 stützt sich auf eine eingeschraubte Platte 8, die zwei durchgehende Bohrungen 9 in axialer Richtung aufweist. Durch diese durchgehende Bohrungen 9 hindurch kann bei geöffneten Ventil 5 das flüssige oder gasförmige Medium strömen. Das Anschlussteil 1 weist ein identisch gestaltetes Ventil 10 auf.

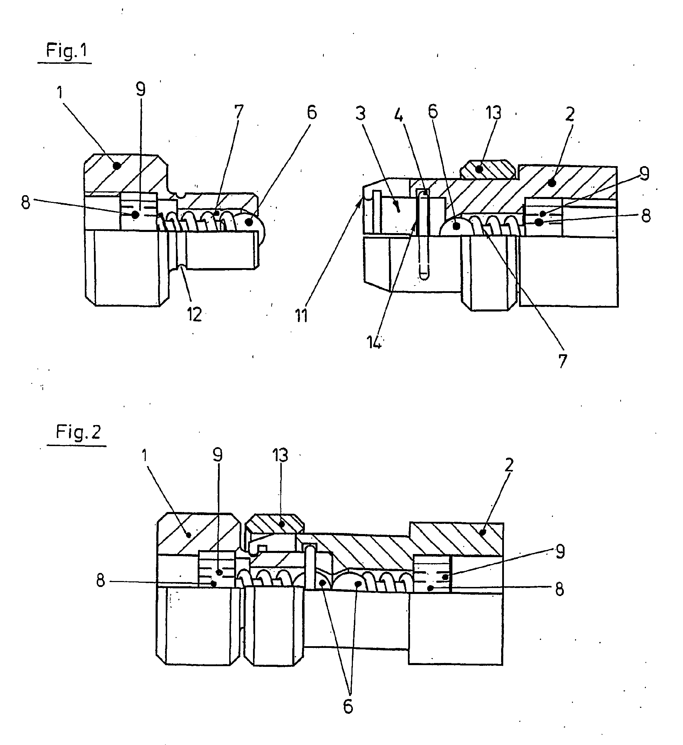

Die den Ventilverschlusskörper des Anschlussteils 1 bildende Kugel 6 ragt über die Stirnseite des Anschlussteils 1 hinaus. Ebenso ragt die als Ventilverschlusskörper wirkende Kugel 6 des Kupplungsteils 2 in die zylinderförmige Aussparung 3 hinein. Bevor beim Verbinden des Anschlussteils 1 mit dem Kupplungsteil 2 die durch den ringförmig umlaufenden, nach innen ragenden Vorsprung 4 definierte Endposition erreicht wird, berühren sich die beiden Kugeln 6. Durch das weitere Zusammenfügen des Anschlussteils 1 mit dem Kupplungsteil 2 drücken die beiden Kugeln 6 sich gegen die wirkenden Federkräfte aus der jeweiligen Verschlusslage. Im geschlossenen Zustand der Miniaturverschlusskupplung (s. Fig. 2) sind beide Kugeln 6 aus der jeweiligen Verschlusslage verschoben, so dass das Ventil 5 des Kupplungsteils 2 und das Ventil 10 des Anschlussteils 1 geöffnet sind.

Eine ringförmige Ausformung 11 des Kupplungsteils 2 rastet im verbundenen Zustand mit einer ebenfalls ringförmigen Einschnürung 12 des Anschlussteils 1 ein und verhindert dadurch ein ungewolltes Lösen der Miniaturverschlusskupplung. Im geschlossenen Zustand kann ein am Kupplungsteil 2 enganliegender Sicherheitsring 13 über den Bereich der Rastverbindung geschoben werden und verhindert dadurch auch bei größerer mechanischer Beanspruchung ein ungewolltes Lösen dieser Verbindung.

Das Kupplungsteil 2 weist eine als O-Ring gestaltete Dichtung 14 auf, die am Rand der zylinderförmigen Aussparung 3 umlaufend im Kupplungsteil 2 angebracht ist. Sobald das Anschlussteil 1 ausreichend tief in die zylinderförmige Aussparung 3 des Kupplungsteils 2 eingeführt wird, verhindert die Dichtung 14 ein ungewolltes Austreten durchgeleiteter flüssiger oder gasförmiger Medien. Die Dichtung 14 ist dabei so angeordnet, dass der Austrittsspalt schon abgedichtet wird, bevor eine der Kugeln 6 aus der jeweiligen Verschlusslage ausgelenkt wird. Es ist natürlich auch denkbar, dass statt der als O-Ring ausgeführten, in der zylinderförmigen.Aussparung 3 angebrachten Dichtung 14 eine auf der Stirnseite des Anschlussteils 1 angebrachte Dichtung verwendet wird.

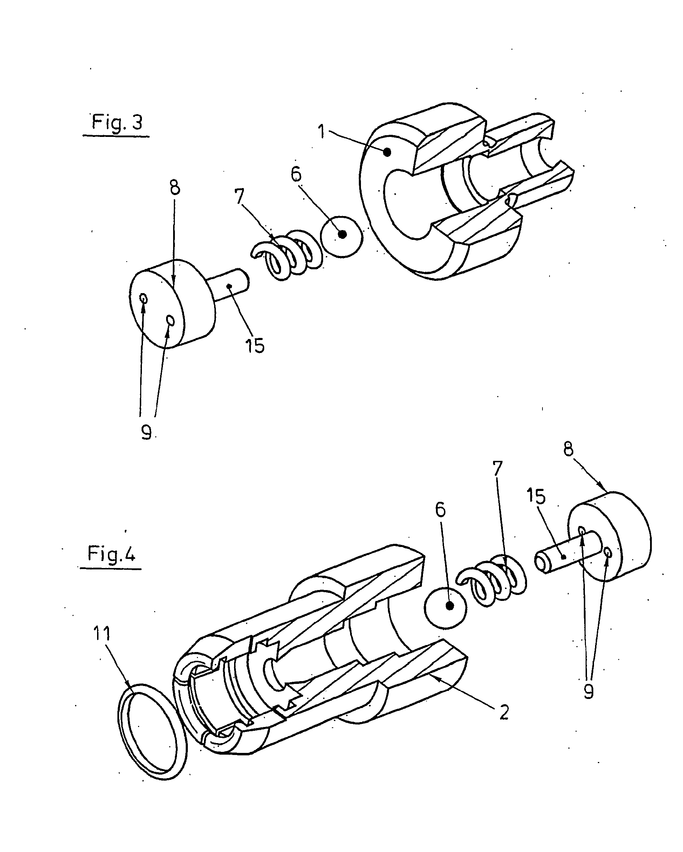

In der auseinandergezogenen Darstellung der Miniaturverschlusskupplung (Fig. 3 und 4) ist der an der eingeschraubten Platte 8 befindliche Anschlagstift 15 sichtbar. Er dient einerseits der schraubenförmigen Ventilfeder 7 als Führung und begrenzt andererseits die maximal mögliche Auslenkung der als Ventilverschlüsskörper wirkenden Kugel 6. Die Länge des in beiden Ventilen 5 und 10 vorkommenden Anschlagstifts 15 ist dabei so bemessen, dass im verbundenen Zustand von Anschlussteil 1 und Kupplungsteil 2 beide Kugeln 6 aus der jeweiligen Verschlusslage ausgelenkt sein müssen. Aufgrund der geringen Volumenströme in der Mikrotechnik ist eine Ausführung der Miniaturverschlusskupplung als gegenseitig öffnendes Kugelventilsystem erst möglich.

Die einzelnen Teile der Miniaturverschlusskupplung können aus Kunststoff oder Metall gefertigt werden. Für viele Reagenzien eine vollständige Ausführung der Miniaturverschlusskupplung aus chemisch beständigem Kunststoff, insbesondere aus PEEK (Polyaryletherketon) vorteilhaft ist, Solche Kunststoffe zeichnen sich zudem über einen weiten Temperaturbereich durch für die meisten Anwendungen ausreichend gute mechanische Eigenschaften aus.

Der Ventilverschlusskörper kann je nach Anforderung hinsichtlich der Belastbarkeit auch aus Keramik gefertigt sein.

## Patentansprüche

1. Verschlusskupplung für die Verbindung von Laborgeräten und Reaktionsbehältern mit einer Versorgungsleitung zum Durchleiten von flüssigen oder gasförmigen Volumenströmen mit einem Kupplungsteil (2) und einem damit verbindbaren Anschlussteil (1), die jeweils einen Ventilsitz, einen ventilverschlusskörper und ein ventilfederelement aufweisen, wobei der Ventilverschlusskörper des Kupplungsteils (2) und der Ventilverschlusskörper des Anschlussteils (1) als Kugeln (6) ausgeführt sind, und mit einer das Anschlussteil (1) und das Kupplungsteil (2) lösbar verbindenden Verriegelungsvorrichtung, wobei in verbundenem Zustand eine vorstehende Ausformung des Anschlussteils (1) das Ventil (5) des Kupplungsteils (2) öffnet und eine vorstehende Ausformung des Kupplungsteils (2) das Ventil (10) des Anschlussteils (1) öffnet,
**dadurch gekennzeichnet, dass** das Anschlussteil (1) eine ringförmige Einschnürung aufweist, in welche eine ringförmige Ausformung des Kupplungsteils (2) eingreift, um das Anschlussteil (1) mit dem Kupplungsteil (2) rastend zu verbinden.

2. verschlusskupplung nach Anspruch 1, **dadurch gekennzeichnet, dass** ein das Kupplungsteil (2) umgebender Sicherheitsring (13) über den Bereich der Rastverbindung verschiebbar ist, der die Rastverbindung unlösbar fixiert.

3. Verschlusskupplung nach Anspruch 2, **dadurch gekennzeichnet, dass** die Endposition des Sicherheitsrings (13) durch eine fühlbare Rastung vorgegeben wird.

4. Verschlusskupplung nach einem der vorangehenden Ansprüche, **dadurch gekennzeichnet, dass** der Ventilverschlusskörper des Anschlussteils (1) und der Ventilverschlusskörper des Kupplungsteils (2) so angeordnet sind, dass sie sich im verbundenen Zustand von Anschlussteilen (1) und Kupplungsteil (2) gegenseitig berühren und aus der jeweiligen Verschlusslage auslenken.

5. Verschlusskupplung nach einem der vorangehenden Ansprüche, **dadurch gekennzeichnet, dass** das Anschlussteil (1) und das Kupplungsteil (2) eine im Wesentlichen hohlzylindrische Form aufweisen, innerhalb der jeweils der Ventilsitz, der Ventilverschlusskörper und das Ventilfederelement angeordnet sind, wobei das flüssige oder gasförmige Material durch den zylindrischen Hohlraum des Anschlussteils (1) und des Kupplungsteils (2) hindurchgeleitet wird.

6. Verschlusskupplung nach einem der vorangehenden Ansprüche, **dadurch gekennzeichnet, dass** das Ventilfederelement des Anschlussteils (1) und/oder das Ventilfederelement des Kupplungsteils (2) als Schraubenfeder (7) ausgeführt ist.

7. Verschlusskupplung nach einem der vorangehenden Ansprüche, **dadurch gekennzeichnet, dass** das Ventilfederelement des Anschlussteils (1) und/oder das Ventilfederelement des Kupplungsteils (2) als Schenkel-oder Tellerfeder ausgeführt ist.

8. Verschlusskupplung nach einem der vorangehenden Ansprüche, **dadurch gekennzeichnet, dass** das Ventilfederelement aus chemisch beständigem Kunststoff oder aus Metall hergestellt ist.

9. Verschlusskupplung nach einem der vorangehenden Ansprüche, **dadurch gekennzeichnet, dass** das Anschlussteil (1) und das Kupplungsteil (2) jeweils einen Anschlag (15) aufweisen, der die Auslenkung des zugeordneten Ventilverschlusskörpers begrenzt.

10. Verschlusskupplung nach einem der vorangehenden Ansprüche, **dadurch gekennzeichnet, dass** das Anschlussteil (1) oder das Kupplungsteil (2) eine zusätzliche Pichtvorrichtung aufweist.

11. Verschlusskupplung nach einem der vorangehenden Ansprüche, **dadurch gekennzeichnet, dass** die Verschlusskupplung aus chemisch beständigem Kunststoff oder aus Metall hergestellt ist.

12. Verschlusskupplung nach einem der vorangehenden Ansprüche, **dadurch gekennzeichnet, dass** mehrere Verschlusskupplungen zu einem Mehrfach-Andocksystem kombinierbar sind.

## Claims

1. Coupling for connecting laboratory apparatus and reaction vessels to a supply line for the conveyance of liquid or gaseous volume flows, comprising a coupling part (2) and a connecting part (1) connectable thereto, which respectively have a valve seat, a valve shutter body and a valve spring element, the valve shutter body of the coupling part (2) and the valve shutter body of the connecting part (1) being realized as balls (6), and comprising a locking device releasably connecting the connecting part (1) and the coupling part (2), wherein in the connected state a protrusion of the connecting part (1) opens the valve (5) of the coupling part (2) and a protrusion of the coupling part (2) opens the valve (10) of the connecting part (1), **characterized in that** the connecting part (1) has an annular constriction in which an annular shaping of the coupling part (2) engages to connect the connecting part (1) in latching engagement to the coupling part (2).

2. Coupling according to Claim 1, **characterized in that** a safety ring (13) surrounding the coupling part (2) is displaceable over the region of the latching connection, which safety ring fixes the latching connection in a non-releasable manner.

3. Coupling according to Claim 2, **characterized in that** the end position of the safety ring (13) is predetermined by a detectable catch.

4. Coupling according to one of the preceding claims, **characterized in that** the valve shutter body of the connecting part (1) and the valve shutter body of the coupling part (2) are arranged such that, in the connected state of the connecting part (1) and the coupling part (2), they mutually touch each other and deflect out of the respective closure position.

5. Coupling according to one of the preceding claims, **characterized in that** the connecting part (1) and the coupling part (2) have a substantially hollow-cylindrical form, within which respectively the valve seat, the valve shutter body and the valve spring element are disposed, the liquid or gaseous material being passed through the cylindrical cavity of the connecting part (1) and of the coupling part (2).

6. Coupling according to one of the preceding claims, **characterized in that** the valve spring element of the connecting part (1) and/or the valve spring element of the coupling part (2) is/are realized as a helical spring (7).

7. Coupling according to one of the preceding claims, **characterized in that** the valve spring element of the connecting part (1) and/or the valve spring element of the coupling part (2) is/are realized as a leg spring or cup spring.

8. Coupling according to one of the preceding claims, **characterized in that** the valve spring element is made of chemically resistant plastic or of metal.

9. Coupling according to one of the preceding claims, **characterized in that** the connecting part (1) and the coupling part (2) respectively have a stop (15), which limits the deflection of the associated valve shutter body.

10. Coupling according to one of the preceding claims, **characterized in that** the connecting part (1) or the coupling part (2) has an additional sealing device.

11. Coupling according to one of the preceding claims, **characterized in that** the coupling is made of chemically resistant plastic or of metal.

12. Coupling according to one of the preceding claims, **characterized in that** a plurality of couplings can be combined to form a multiple docking system.

## Revendications

1. Accouplement à fermeture destiné à relier des appareils de laboratoire et des récipients de réaction à un conduit d'alimentation qui permet de faire passer des écoulements volumiques liquides ou gazeux, lequel accouplement présente une pièce d'accouplement (2) et une pièce de raccordement (1) qui peut y être reliée et qui présentent toutes deux un siège de soupape, un corps de fermeture de soupape et un élément élastique de soupape, le corps de fermeture de soupape de la pièce d'accouplement (2) et le corps de fermeture de soupape de la pièce de raccordement (1) étant configurés en forme de billes (6), et présente un dispositif de verrouillage qui relie de manière libérable la pièce de raccordement (1) à la pièce d'accouplement (2), une moulure en saillie de la pièce de raccordement (1) ouvrant la soupape (5) de la pièce d'accouplement (2) et une moulure en saillie de la pièce d'accouplement (2) ouvrant la soupape (10) de la pièce de raccordement (1) lorsque les pièces sont reliées,
**caractérisé en ce que**
la pièce de raccordement (1) présente un rétrécissement annulaire dans lequel s'engage une moulure annulaire de la pièce d'accouplement (2) pour relier par encliquetage la pièce de raccordement (1) à la pièce d'accouplement (2).

2. Accouplement à fermeture selon la revendication 1, **caractérisé en ce qu'**un anneau de sécurité (13) qui entoure la pièce d'accouplement (2) peut coulisser au-dessus de la zone occupée par la liaison encliquetable pour fixer la liaison encliquetable de manière non libérable.

3. Accouplement à fermeture selon la revendication 2, **caractérisé en ce que** la position d'extrémité de l'anneau de sécurité (13) est prédéterminée par un encliquetage détectable.

4. Accouplement à fermeture selon l'une des revendications précédentes, **caractérisé en ce que** le corps de fermeture de soupape de la pièce de raccordement (1) et le corps de fermeture de soupape de la pièce d'accouplement (2) sont disposés de telle sorte qu'ils reposent l'un sur l'autre et sortent de leur position de fermeture lorsque la pièce de raccordement (1) et la pièce d'accouplement (2) sont reliées.

5. Accouplement à fermeture selon l'une des revendications précédentes, **caractérisé en ce que** la pièce de raccordement (1) et la pièce d'accouplement (2) ont essentiellement la forme de cylindres creux à l'intérieur de chacun desquels sont disposés le siège de soupape, le corps de fermeture de soupape et l'élément élastique de soupape, le matériau liquide ou gazeux traversant l'espace cylindrique creux de la pièce de raccordement (1) et de la pièce d'accouplement (2).

6. Accouplement à fermeture selon l'une des revendications précédentes, **caractérisé en ce que** l'élément élastique de soupape de la pièce de fermeture (1) et/ou l'élément élastique de soupape de la pièce d'accouplement (2) sont configurés comme ressorts hélicoïdaux (7).

7. Accouplement à fermeture selon l'une des revendications précédentes, **caractérisé en ce que** l'élément élastique de soupape de la pièce de raccordement (1) et/ou l'élément élastique de soupape de la pièce d'accouplement (2) sont configurés comme ressorts à branches ou ressorts à plateaux.

8. Accouplement à fermeture selon l'une des revendications précédentes, **caractérisé en ce que** l'élément élastique de soupape est réalisé en une matière synthétique qui résiste aux produits chimiques ou en métal.

9. Accouplement à fermeture selon l'une des revendications précédentes, **caractérisé en ce que** la pièce de raccordement (1) et la pièce d'accouplement (2) présentent toutes deux une butée (15) qui limite le déplacement du corps de fermeture de soupape qui leur est associé.

10. Accouplement à fermeture selon l'une des revendications précédentes, **caractérisé en ce que** la pièce de raccordement (1) ou la pièce d'accouplement (2) présentent un dispositif supplémentaire d'étanchéité.

11. Accouplement à fermeture selon l'une des revendications précédentes, **caractérisé en ce que** l'accouplement à fermeture est réalisé en une matière synthétique qui résiste aux produits chimiques ou en métal.

12. Accouplement à fermeture selon l'une des revendications précédentes, **caractérisé en ce que** plusieurs accouplements à fermeture peuvent être combinés pour former un système de raccordements multiples.
